Europäisches Patentamt

European Patent Office

Office européen des brevets

(19)

(11) Publication number: **0 285 400**
**A2**

(12) # EUROPEAN PATENT APPLICATION

(21) Application number: **88302847.4**

(22) Date of filing: **30.03.88**

(51) Int. Cl.⁴: **H 01 S 3/13**
**G 01 K 7/00**

(30) Priority: **31.03.87 US 32862**

(43) Date of publication of application:
**05.10.88 Bulletin 88/40**

(84) Designated Contracting States: **DE FR GB**

(71) Applicant: **Spectra-Physics Inc.**
**3333 North First Street**
**San Jose California 95134-1995 (US)**

(72) Inventor: **Koop, Dale E.**
**655 South Fair Oaks Avenue Apt.N214**
**Sunnyvale CA 94086 (US)**

(74) Representative: **Ford, Michael Frederick et al**
**MEWBURN ELLIS & CO. 2/3 Cursitor Street**
**London EC4A 1BQ (GB)**

(54) **Laser power monitor.**

(57) A power monitor for monitoring the power output of a laser comprises a metal sensor disk and two sets of semiconductor sensors. The semiconductor sensors are mounted directly on the metal disk on the side of the disk opposite to that which receives the output power beam of the laser. The first, hot semiconductors sensors are mounted in a circular pattern around an inner, hot region of the metal disk. The second, cold semiconductor sensors are mounted directly onto the metal sensor disk in an outer, cold region which is maintained at a uniform temperature by a heat sink. The semiconductor sensors produce linear current outputs which are exactly proportional to the sensed temperature in degrees Kelvin. An amplifier is associated with the two sets of semiconductor sensors for detecting the temperature gradient between the inner, hot region and the outer, cold region of the metal disk. The amplifier is effective to indicate the output power of the laser as a function of that temperature difference.

FIG. 2

# Description

"LASER POWER MONITOR"

## BACKGROUND OF THE INVENTION

This invention relates to a power monitor for monitoring the power output of a laser.

This invention relates particularly to a power monitor which uses solid state semiconductor sensors mounted directly onto a back side of a metal sensor disk.

Power monitors for monitoring power output of a laser have used sensor disks for converting the light energy of a laser beam to heat energy. In power monitors of this kind the sensor disk is placed across the output end of a laser power monitor tube, and the laser beam is directed onto one side of the sensor disk. This heats the sensor disk, causing a termal gradient, and the thermal gradient is detected and measured by temperature sensors mounted on the back side of the sensor disk. Thermocouple sensors have been used as the sensors for measuring the amount of the thermal gradient (and thus the power output of the laser). When thermocouples are used, the thermocouples are ganged up in a thermal pile. This requires a special technique to manufacture, because it is necessary to plate the thermocouples onto an insulating substrate. This technique of manufacture using thermocouples is relatively expensive.

## SUMMARY OF THE PRESENT INVENTION

It is a primary object of the present invention to construct a power monitor which eliminates the relative high manufacturing cost involved in making a power monitor which uses thermocouple sensors.

It is a related object of the invention to construct a power monitor which uses solid state semiconductor sensors on the sensor disk.

It is a closly related object to construct a power monitor in which the solid state, semiconductor sensors can be mounted directly to the surface of a metal sensor disk without the need for an intervening substrate and without the cost required for a substrate.

In one embodiment of the present invention two sets of semiconductor sensors are mounted directly onto the back side of a metal sensor disk.

The first semiconductor sensors are distributed in a circular pattern about an outer peripheral portion of an inner, hot region of the sensor disk. The output beam of the laser is confined within this hot region.

The second semiconductor sensors are mounted directly on the metal sensor disk in an outer, cold region of the disk. This outer, cold region is associated with a heat sink so that a relatively uniform temperature is maintained throughout the cold region.

The temperature gradient between the hot region and the cold region is detected by the first and second set of sensors, and the outputs of these sensors are fed to an amplifier which indicates the laser power at the outlet of the amplifier. The output level of the circuit is calibrated to read a fixed voltage per watt of incident power of the laser.

The semiconductor sensors provide linear current outputs which can be proportional, preferably exactly proportional, to the sensed temperatures in degrees Kelvin.

A plurality of sensors are used for sensing the temperature in the hot regions of the disk so that the outputs of these sensors can be averaged to provide an accurate indication of the laser power, regardless of variations in the location or in the pattern of the laser beam within the hot region.

Laser power monitor apparatus and methods which use solid state, semiconductor sensors and which are constructed as described above and effective to function as described above constitute further, specific objects of the present invention.

Other and further objects of the present invention will be apparent from the following description and claims and are illustrated in the accompanying drawings, which by way of illustration, show preferred embodiments of the present invention and the principles thereof and what are now considered to be the best modes contemplated for applying these principles. Other embodiments of the invention embodying the same or equivalent principles may be used and structural changes may be made as desired by those skilled in the art without departing from the present invention and the purview of the appended claims.

## BRIEF DESCRIPTION OF THE DRAWING VIEWS

Figure 1 is a side elevation view, partly in cross section, of a power monitor for monitoring the power output of a laser and constructed in accordance with one embodiment of the present invention.

Figure 2 is an end elevation view taken generally along the line and in the direction indicated by the arrows 2-2 in Figure 1 (but with the circuit card assembly removed to show details of how the semiconductor sensors are mounted on the sensor disk).

Figure 3 is a schematic view of an electrical circuit used with the power monitor shown in Figure 1.

## DETAILED DESCRIPTION OF THE EMBODIMENTS

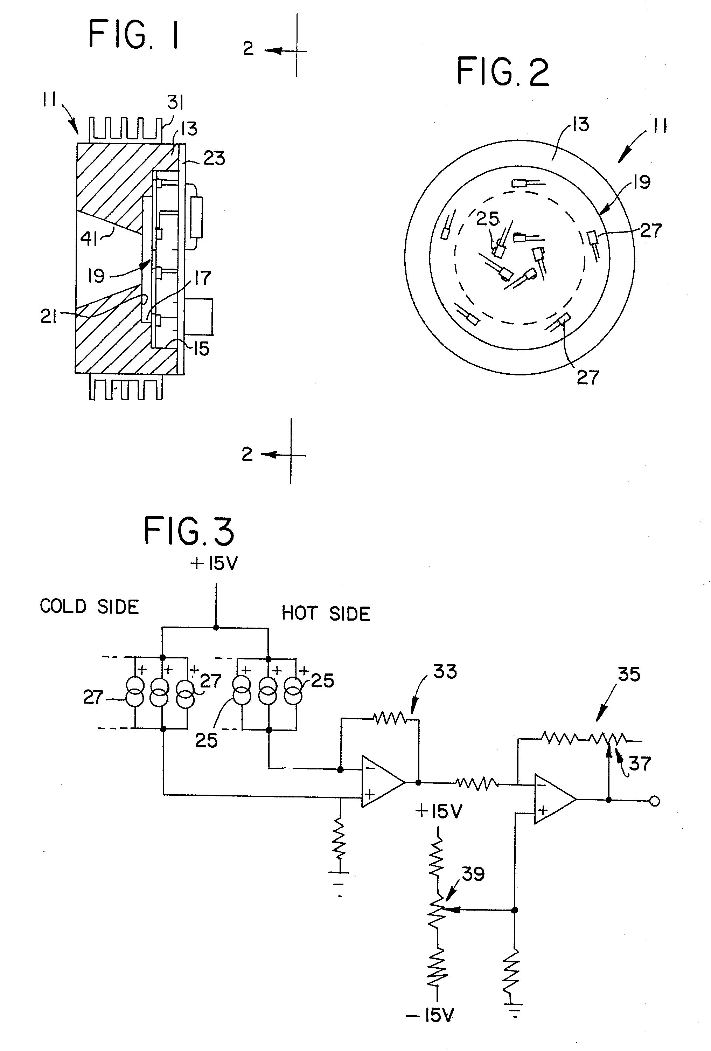

A power monitor for monitoring the power output of a laser and constructed in accordance with one embodiment of the present invention is indicated generally by the reference numeral 11 in Figure 1.

The monitor 11 comprises a ring or collar member 13 which is adapted to be connected to the outlet end of a laser power monitor tube.

The member 13 is formed with a first counter bore 15 and a second, smaller diameter counter bore 17.

A metal sensor disk 19 is mounted within member 13 on the annular surface 21 formed at the bottom of the counter bore 15.

A circuit card assembly 23 is mounted on an end (right-hand end as viewed in Figure 1) of the member 13.

As best shown in Figure 2 the power monitor 11 includes a first set of semiconductor sensors 25 and a second set of semiconductor sensors 27. The sensors are mounted directly to the metal sensor disk 19 on the back side of the disk.

In one specific embodiment of the present invention the disk 19 is an aluminum disk which is black anodized.

The semiconductor sensors 25 and 27 are solid state temperature sensors which are mounted directly on the metal surface of the disk and which do not require an intermediate substrate between the sensors and the disk (as would be the case if thermocouples were used). The semiconductor sensors 25 and 27 produce current outputs which are exactly proportional to the temperature in degrees Kelvin as sensed by the sensors. In specific embodiments of the present invention National Semiconductor LM3911 sensors and Analog Devices AD590 semiconductor sensors have been used.

The solid state temperature sensors 25 and 27 offer several advantages over thermocouple sensors. The solid state, semiconductor sensors 25 and 27 do not need to be ganged in a thermal pile and do not require a special technique to manufacture, because the sensors 25 and 27 do not have to be plate onto a substrate. The semiconductor sensors 25 and 27 do not have to be separated from the metal plate 27 by an insulating substrate and therefore provide a very significant manufacturing cost advantage over thermocouple temperature sensors.

The way that the sensor disk 19 is mounted in the power monitor 11 enables the sensor disk 19 to be divided into an inner, hot region for receiving the output power beam of the laser on the front side of the disk and an outer, cold region which is connected to a heat sink.

The heat sink is indicated as an air-cooled, finned heat sink 31 in Figure 1, but the heat sink can also be a water jacket.

The sensors 25 are arranged in a generally circular pattern (see Figure 2) so as to be disposed about the outer periphery of the hot region. This arrangment enables the individual outputs of the individual sensors 25 to be summed up (in a parallel electrical circuit as shown in Figure 3) to provide an integration of the total power over the hot portion of the disk. Any particular pattern or location of the beam, such as the light being off to one side or the other within the hot portion of the disk, therefore does not affect the accurate detection and indication of the power output. The integrating function assures an accurate measurement.

The sensors 27 are located in the outer, cold region of the disk. This region is associated with the heat sink 31 so that this region is maintained at a relatively uniform temperature throughout the cold region. Because the cold region is maintained at a relatively uniform temperature throughout the cold region, it is possible to use a single sensor 27, but it is preferable to use a plurality of sensors 27, and in a specific embodiment of the present invention the same number of cold sensors 27 are used as the number of hot sensors 25. This is the arrangement illustrated in Figure 3 where the sensors 25 are shown connected in parallel and where the sensors 27 are shown connected in parallel, and where the number of the sensors 25 matches the number of sensors 27.

The electrical circuit shown in Figure 3 includes a differential preamp 33 and an output amplifier 35. Both the preamp 33 and the output amp 35 are op-amps in one specific embodiment of the present invention.

The output amplifier 35 includes a gain control 37 and a control 39 for offset.

In a specific embodiment of the invention, the output of the circuit 35 is calibrated to provide 0.1 volt per watt of laser power. This electrical output can be converted directly to an indication, in watts, of laser power of the laser monitored by the laser monitor 11.

As indicated above, the laser power is concentrated within the inner, hot region of the disk 19 -- the region encircled by the sensors 25.

The member 13 as shown in Figure 1 includes a cone 41 which can be used, in some cases, to concentrate the laser beam within this hot region. However, in many cases the laser beam itself is small enough in diameter so that the cone 41 is not needed. In that event the laser beam projects through the aperature provided at the base of the cone without impinging on the converging sidewall of the cone 41 and without being converged by the sidewall 41 of the cone.

While I have illustrated and described the preferred embodiments of the invention, it is to be understood that these are capable of variation and modification, and I therefore do not wish to be limited to the precise details set forth, but desire to avail myself of such changes and alterations as fall within the purview of the following claims.

**Claims**

1. A power monitor for monitoring the power output of a laser and comprising,
   a metal sensor disk having an inner, hot region for receiving an output beam of a laser power monitor tube on a front side of the metal sensor disk and having an outer, cold region connected to a heat sink,
   first semiconductor means for sensing the hot temperature and mounted directly onto a back side of the metal sensor disk along an outer peripheral portion of the inner, hot region,
   second semiconductor means for sensing the cold temperature and mounted directly onto the metal sensor disk in the outer, cold region, and
   amplifier means having one input connected to the first hot sensor means and another input connected to the second, cold sensor means for detecting the temperature gradient between

**0 285 400**

the inner, hot region and the outer, cold region and effective to indicate at the outlet of the amplifier means the output power of the laser.

2. The invention defined in claim 1 wherein the semiconductor means produce current outputs which are exactly proportional to the temperature in degrees Kelvin.

3. The invention defined in claim 2 wherein the first semiconductor means comprise a plurality of individual semiconductor sensors arranged in a generally circular pattern around said outer peripheral portion of the inner, hot region and where the individual outputs of the individual sensors are summed up and averaged to produce an accurate indication of the total power on the disk regardless of the particular pattern or location of the laser light beam within the inner, hot region.

4. The invention defined in claim 3 wherein the outputs of the semiconductor sensors are connected in parallel and wherein the same number of semiconductor sensors are used in the second semiconductor means as are used in the first semiconductor means.

5. The invention defined in claim 1 including a collecting cone for concentrating the laser power within the ring defined by the first semiconductor means.

6. The invention defined in claim 1 wherein the heat sink is an air cooled heat sink.

7. The invention defined in claim 1 wherein the heat sink is a water cooled heat sink.

8. A method of monitoring the output power of a laser, said method comprising,

dividing a light absorbing thermally conductive sensor member into a heated region for receiving an output power beam of a laser on a front side of the sensor member and a cold region for connection to a heat sink,

connecting a heat sink to the cold region,

mounting at least one semiconductor sensor for sensing the hot temperature on the back side sensor member adjacent to the hot region,

mounting at least one semiconductor sensor for sensing the cold temperature on the sensor member in the cold region adjacent to the heat sink,

concentrating the laser power within the inner, hot region, and

connecting one input of an amplifier to the hot temperature sensor and another input of the amplifier to the cold temperature sensor to detect the temperature gradient between the inner, hot region and the outer, cold region and to indicate at the outlet of the amplifier the output power of the laser.

0285400

FIG. 1

FIG.2

FIG.3

COLD SIDE    +15V    HOT SIDE